# EUROPEAN PATENT SPECIFICATION

(11) **EP 3 216 988 B1**
(45) Date of publication and mention of the grant of the patent: **11.05.2022**
(21) Application number: 17154033.9
(22) Date of filing: 31.01.2017
(51) Int. Cl.: F01K 7/16, F01D 25/10, F01D 25/12, F01D 11/24

(54) **STEAM TURBINE PLANT**
DAMPFTURBINENANLAGE
CENTRALE À TURBINE À VAPEUR

(30) Priority: 07.03.2016 JP 2016043739
(43) Date of publication of application: 13.09.2017
(73) Proprietor: Mitsubishi Power, Ltd., Yokohama, Kanagawa 220-8401 (JP)
(72) Inventor: KIM, Eunkyeong, Tokyo 100-8280 (JP); YOSHIDA, Yasuhiro, Tokyo 100-8280 (JP); YOSHIDA, Takuya, Tokyo 100-8280 (JP); YASHIKI, Tatsuro, Tokyo 100-8280 (JP); KAWATA, Miyuki, Tokyo 100-8280 (JP); YAMANAKA, Kazunori, Kanagawa 220-8401 (JP); IYANAGA, Norihiro, Kanagawa 220-8401 (JP); SUZUKI, Fumiyuki, Kanagawa 220-8401 (JP)
(74) Representative: MERH-IP Matias Erny Reichl Hoffmann Patentanwälte PartG mbB

(56) References cited:
- EP-A1- 0 794 320
- JP-A- S5 838 308
- US-A- 2 402 841
- US-A- 4 498 301
- US-A1- 2015 354 414

## Description

### BACKGROUND OF THE INVENTION

### FIELD OF THE INVENTION

The present invention relates to a steam turbine plant provided with a steam turbine such as a combined cycle power plant or a coal-fired power plant.

### BACKGROUND ART

Since the power generation amount varies greatly in a power generation plant using renewable energy represented by wind power generation or solar power generation, fast start-up (in other words, starting in a shorter period of time) of a power generation plant (steam turbine plant) provided with a steam turbine is required for the stabilization of the power system.

In the fast start-up of the steam turbine, since a rotor of the steam turbine and a casing for housing the rotor are exposed to high temperature steam entering the steam turbine, the rotor and the casing are heated, and thermally expanded, and thus extend particularly in a turbine axial direction. Since a structure and heat capacity of the rotor are different from that of the casing, difference between thermal expansion of the rotor and that of the casing (hereinafter, referred to as the differential thermal expansion between the rotor and the casing) is generated.

In the fast start-up of the steam turbine, it is known that thermal deformation of the casing occurs. Specifically, for example, since the casing is divided into an upper half and a lower half, and their structure and heat capacity are different, temperature difference is generated. The high temperature side is thermally expanded greater than the low temperature side, and thus heat deformation is generated so as to shrink along the side of the low temperature side (refer to Rainer Quinkertz, Thomas Thiemann, Kai Gierse, 2011, "Validation of advanced steam turbine technology -A case study of an ultra super critical steam turbine power plant", Proceedings of ASME Turbo Expo 2011, GT 2011-45816) . There is a flange portion for the upper half and lower half of the casing are joined by screws, and the temperature of the inner circumferential surface of the flange portion is increased, later than the cylinder portion which is exposed to the high temperature steam. Therefore, the thermal deformation caused by temperature distribution is generated (for example, refer to John McElhaney, 2008, "Distortion Compensation by shape modification of complex turbine geometries in the presence of high temperature gradients", Proceedings of ASME Turbo Expo 2008, GT2008-50757) .

When the differential thermal expansion between the rotor and the casing or the thermal deformation of the casing described above is increased, the rotor (rotating portion) and the casing (stationary portion) are damaged in contact with each other. Therefore, it is required to control the amount of heat input to the steam turbine so that the differential thermal expansion falls within a predetermined limit value.

For a method of controlling the amount of heat input to the steam turbine, a method of generating steam by using exhaust heat from a gas turbine compressor and of preheating the steam turbine by using this steam in a combined cycle power plant is known (for example, refer to JP-A-2013-133825). A method of disposing a protective shield to protect against direct action of steam in the steam passage of the steam turbine is known (for example, refer to JP-A-2010-138916). A method of mounting the heater to the casing of the steam turbine is known (for example, refer to JP-A-9-88510).

In JP S58 38308 A a low pressure steam turbine having a casing heated by exhaust gas extracted from a gas turbine is described.

In US 4 498 301 A a cooling device for a steam turbine is described. A portion of a boiler feed water is supplied to a cooling fluid passage of a casing of the turbine after being heated by high pressure feed water heaters.

### SUMMARY OF THE INVENTION

As described in JP-A-2013-133825, since heat of fluid that does not finish a work in a gas turbine is used, in a method using steam generated by using exhaust heat from a gas turbine compressor, there is a possibility of lowering efficiency of the gas turbine (heat source device). There is a need for an installation of a heat exchanger and changes of control circuits that control the gas turbine.

As described in JP-A-2010-138916, a method using the steam that flows in the steam passage of a steam turbine can use the heat only when the steam is generated from a steam generating device. Since the steam is normally and partially branched from a steam of the main stream by a protective shield, there is a possibility of lowering efficiency at rated load of the steam turbine.

As described in JP-A-9-88510, a method using a heater is required an external power supply for securing the power of the heater.

The purpose of the invention is to provide a steam turbine plant that can reduce differential thermal expansion of a steam turbine by further effectively using heat in a plant, without affecting efficiency and control of a heat source device, and regardless of a presence or absence of steam generation by a steam generating device.

To achieve the above purpose, a steam turbine plant with the features of claim 1 is provided which includes in particular a heat source device that heats a low temperature fluid by a heat source medium to obtain a high temperature fluid, a steam generating device that generates steam by heat exchange with the high temperature fluid obtained by the heat source device, a steam turbine that is driven by the steam generated by the steam generating device, a heating flow path that is disposed on an outer surface of a casing of the steam turbine or inside a member configuring the casing, a high temperature fluid supply passage that is branched from a flow path of the high temperature fluid in the steam generating device, is connected to the heating flow path, and supplies the high temperature fluid to the heating flow path, and/or a high temperature fluid flow rate regulating device that regulates a flow rate of the high temperature fluid flowing through the high temperature fluid supply passage.

According to the invention, it is possible to reduce the differential thermal expansion of the steam turbine by further effectively using the heat in the plant, without affecting the efficiency and control of the heat source device, and regardless of the presence or absence of the steam generation by the steam generating device.

### BRIEF DESCRIPTION OF THE DRAWINGS

Fig. 1 is a schematic diagram illustrating a configuration of a steam turbine plant according to a first embodiment of the invention.
Fig. 2 is a cross-sectional view in a turbine radial direction illustrating a schematic structure of a heating flow path of a casing of a steam turbine according to the first embodiment of the invention.
Fig. 3 is a cross-sectional view in a turbine axial direction illustrating a schematic structure of the heating flow path of the casing of the steam turbine according to the first embodiment of the invention.
Fig. 4 is a view for explaining a flow rate control of a high temperature fluid to be supplied to the heating flow path according to the first embodiment of the invention.
Fig. 5 is a view for explaining differential thermal expansion between a rotor of the steam turbine and the casing according to the first embodiment of the invention and the related art.
Fig. 6 is a schematic diagram illustrating a configuration of a steam turbine plant according to a second embodiment of the invention.
Fig. 7 is a cross-sectional view in a turbine radial direction illustrating a schematic structure of a heating flow path and a cooling flow path of a casing of a steam turbine according to the second embodiment of the invention.
Fig. 8 is a cross-sectional view in a turbine axial direction illustrating a schematic structure of the heating flow path and the cooling flow path of the casing of the steam turbine according to the second embodiment of the invention.
Fig. 9 is a view for explaining a flow rate control of a low temperature fluid to be supplied to the cooling flow path according to the second embodiment of the invention.
Fig. 10 is a view for explaining temperature difference between an upper half and a lower half of the casing of the steam turbine according to the second embodiment of the invention and the related art.

### DETAILED DESCRIPTION OF THE INVENTION

Control means for controlling the amount of heat input to a steam turbine and a steam turbine plant having this means according to a first embodiment of the invention will be described with reference to drawings.

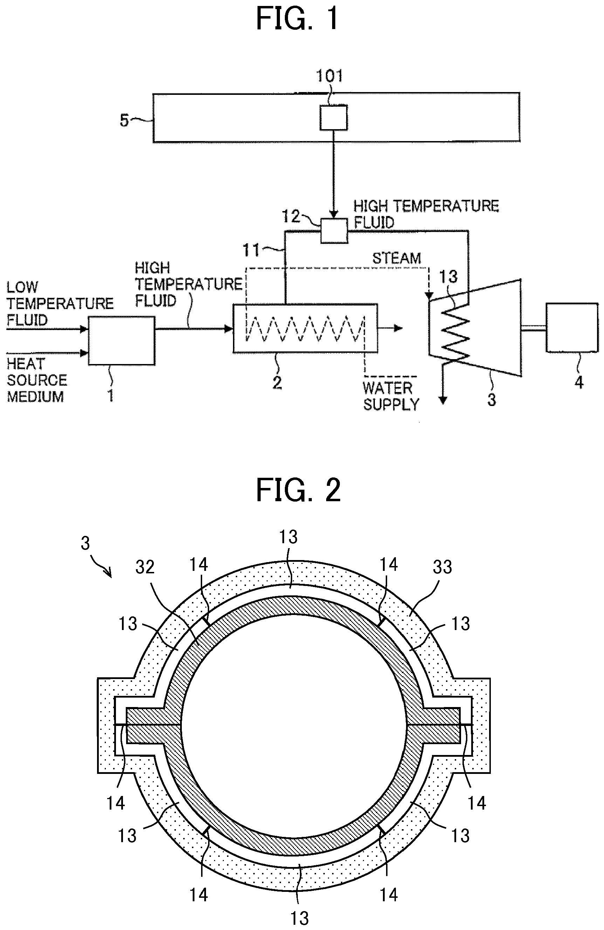

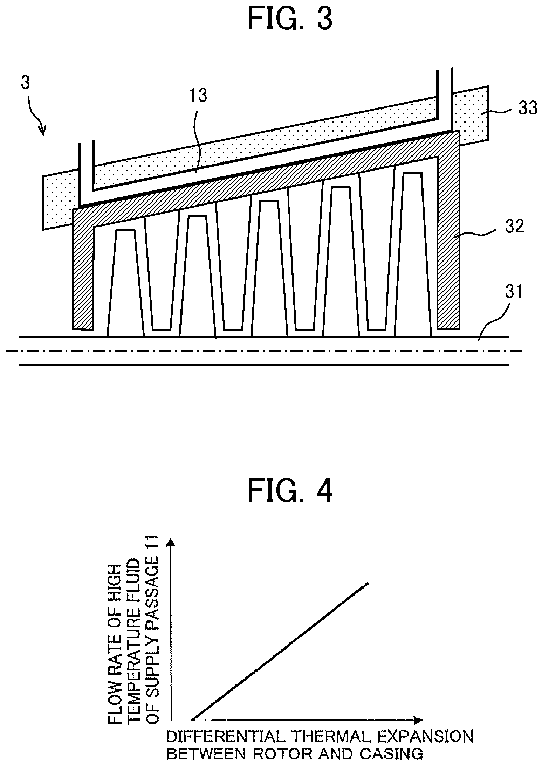

Fig. 1 is a schematic diagram illustrating a configuration of the steam turbine plant according to the embodiment. In Fig. 1, only configuration components and control circuits required for describing the invention are illustrated. Fig. 2 is a cross-sectional view in a turbine radial direction illustrating a schematic structure of a heating flow path of a casing of a steam turbine according to the embodiment, and Fig. 3 is a cross-sectional view in a turbine axial direction. In Fig. 2, drawings of a rotor, a moving blade, and a stationary blade are omitted, and in Fig. 3, only an upper half side of a turbine is illustrated.

The steam turbine plant of the embodiment is provided with a heat source device 1, a steam generating device 2, a steam turbine 3, a generator 4, and a plant control device 5.

The heat source device 1 generates high temperature fluid by heating low temperature fluid with a heat source medium, and is adapted to supply the high temperature fluid to the steam generating device 2. There is a gas turbine of a combined cycle power plant as one concrete example of the heat source device 1, using natural gas and kerosene as the heat source medium. There is a furnace of a coal-fired power plant as another concrete example, using coal as the heat source medium. There is a heat collector of a solar thermal power plant as still another concrete example, using sunlight as the heat source medium.

The steam generating device 2 has a flow path in which the high temperature fluid supplied from the steam generating device 2 flows, and a plurality of heat exchangers (only one is conceptually illustrated in Fig. 1) disposed in a flow direction in the flow path. The steam generating device 2 generates steam from the water supply by heat exchange with the high temperature fluid, and is adapted to supply the steam to the steam turbine 3.

The steam turbine 3 is provided with a casing 32 that houses a rotor 31 and the rotor 31, and a heat insulating material 33 disposed on the outside of the casing 32. A plurality of the moving blades are disposed in an outer peripheral side of the rotor 31, and a plurality of the stationary blades are disposed in an inner peripheral side of the casing 32. The moving blades and the stationary blades are alternately arranged in the turbine axial direction. The steam turbine 3 is driven by the steam supplied from the steam generating device 2. The generator 4 connected to the steam turbine 3 is adapted to convert a driving force of the steam turbine 3 to the power.

The plant control device 5 inputs a measurement value of plant state quantity (specifically, for example, such as the temperature of the high temperature fluid supplied from the heat source device 1 to the steam generating device 2 and the temperature of the steam supplied from the steam generating device 2 to the steam turbine 3), and calculates to output a command value to the plant configuration components (specifically, for example, such as a valve to adjust the flow rate of the heat source medium supplying to the heat source device 1, and a valve to adjust the flow rate of the steam supplying from the steam generating device 2 to the steam turbine 3), based on the measurement value.

Here, as one feature of the embodiment, a plurality (six in the embodiment) of the heating flow paths 13 having layer shape are disposed between the casing 32 and the heat insulating material 33 of the steam turbine 3 (in other words, on outer surface of the casing 32). The heating flow path 13 is partitioned by a plurality of partition plates 14 extending in the turbine axial direction. The heating flow path 13 is configured so that the high temperature fluid flows into one side end of the heating flow path 13, and flows out from the other side end of the heating flow path 13 after the heating of the casing 32 is finished.

As one feature of the embodiment, a high temperature fluid supply passage 11 branched from the flow path of the high temperature fluid in the steam generating device 2, and connected to the heating flow path 13 is disposed. The high temperature fluid supply passage 11 partially supplies the high temperature fluid flowing into the steam generating device 2 to the heating flow path 13. A high temperature fluid flow rate regulating device 12 disposed in the high temperature fluid supply passage 11 is adapted to adjust the flow rate of the high temperature fluid flowing through the high temperature fluid supply passage 11, based on the command value (described later) . Specifically, the high temperature fluid flow rate regulating device 12, for example, has means for adjusting a cross-sectional area of the flow path, and means for facilitating the flow to manipulate these means at the same time. As the means for adjusting the cross-sectional area of the flow path, for example, a partition plate or a valve is included. As the means for facilitating the flow, a ventilator or a blower is included. For example, the cross-sectional area of the flow path is varied by rotating or moving the partition plate, while maintaining the flow velocity by the ventilator constant. Therefore, the flow rate of the high temperature fluid is adjusted. However, if the sufficient flow velocity of the high temperature fluid can be ensured, it may not have the means for facilitating the flow. In a case of using the ventilator capable of regulating the flow rate, it may not have the means for regulating the cross-sectional area of the flow path.

As one feature of the embodiment, the plant control device 5 has a heating control circuit 101 that controls the high temperature fluid flow rate regulating device 12. The heating control circuit 101 inputs the measurement value of differential thermal expansion between the rotor 31 and the casing 32, or calculates the differential thermal expansion between the rotor 31 and the casing 32 by a known method of the heat transfer engineering. For example, as illustrated in Fig. 4, a numerical table or a formula that indicates a relationship such that the flow rate of the high temperature fluid of the high temperature fluid supply passage 11 is increased, as the differential thermal expansion between the rotor 31 and the casing 32 is increased, is previously stored. The flow rate of the high temperature fluid supply passage 11 is calculated from the measurement value or a calculated value of the differential thermal expansion, based on the numerical table or the formula, and the command value corresponding to the flow rate is calculated and outputs to the high temperature fluid flow rate regulating device 12.

As illustrated in Fig. 4, an example of a method for obtaining the relationship between the differential thermal expansion between the rotor 31 and the casing 32 and the flow rate of the high temperature fluid of the high temperature fluid supply passage 11, performs a following calculation for each differential thermal expansion between the rotor 31 and the casing 32 (in other words, for each temperature difference). The required amount of heat is calculated in order that the temperature of the casing 32 is to be equal to the temperature of the rotor 31 from the temperature, mass, or specific heat of the rotor 31 and the casing 32, based on the known method of the heat transfer engineering. The required flow rate of the high temperature fluid for supplying the amount of heat is calculated from the amount of heat described above, the temperature of the high temperature fluid of the high temperature fluid supply passage 11, or thermal resistance between the high temperature fluid and the casing 32, based on the known method of the heat transfer engineering. In addition to this method, it is possible to seek by trial and error by using a steam turbine structure analysis tool created based on the known method of the heat transfer engineering.

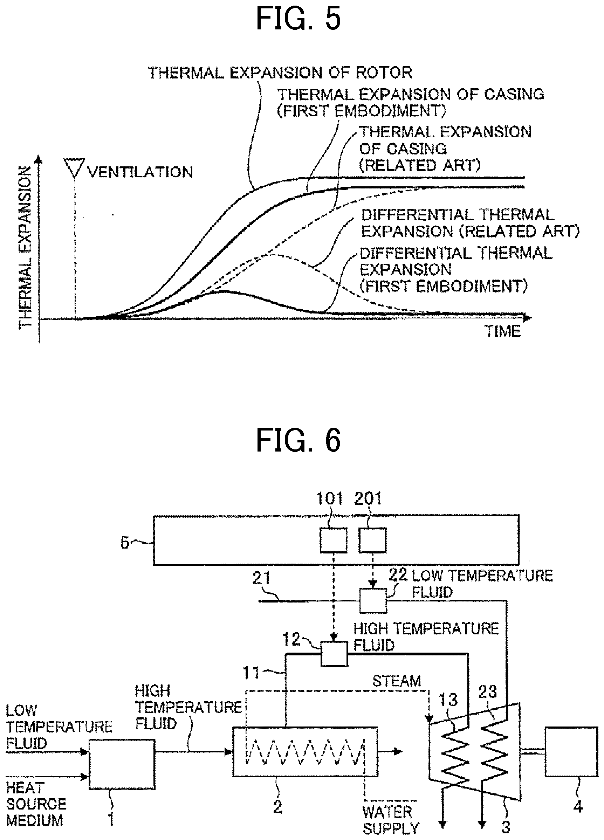

Next, the function and effect of the embodiment will be described with compared to the related art. Fig. 5 is a view for explaining differential thermal expansion between the rotor and the casing of the steam turbine according to the embodiment and the related art.

In the related art (that is, in a case where the high temperature fluid supply passage 11, the high temperature fluid flow rate regulating device 12, and the heating flow path 13 are not disposed), at a time of starting the plant, since thermal expansion of the rotor and thermal expansion of the casing of the steam turbine occur as illustrated in Fig. 5, the differential thermal expansion between the rotor and the casing is increased.

Meanwhile, in the embodiment, at the time of starting the plant, the high temperature fluid is supplied to the heating flow path 13 of the casing 32 of the steam turbine 3 from the steam generating device 2 via the high temperature fluid supply passage 11. Thereby, the casing 32 is heated, and thus the thermal expansion of the casing 32 is facilitated, as illustrated in Fig. 5. As a result, the differential thermal expansion between the rotor 31 and the casing 32 can be reduced.

In the embodiment, since the high temperature fluid finishing a work is used in the heat source device 1, the fluid does not affect the efficiency and control of the heat source device 1. Changing the control circuit for controlling the heat source device 1 is not required.

In the embodiment, since the high temperature fluid flowing in the steam generating device 2 is partially used, regardless of a presence or absence of the steam generation in the steam generating device 2, the heat of the high temperature fluid can be used. Therefore, from before, that is, from an earlier time to generate the steam in the steam generating device 2, the casing 32 can be heated. Since the high temperature fluid which is at a higher temperature than the steam can be used, the casing 32 can be heated at fast. Accordingly, the differential thermal expansion can be reduced.

In the embodiment, the heat of the high temperature fluid can be used only in a period in which the differential thermal expansion between the rotor 31 and the casing 32 of the steam turbine 3 occurs. Therefore, the plant can be operated without lowering the efficiency in the rated load of the steam turbine 3.

In the embodiment, by effectively using the heat in the plant, the amount of heat input to the steam turbine 3 is controlled. Therefore, for example, unlike a case of disposing a heater for heating the casing, an external power source for securing the power of the heater is not necessary.

Control means for controlling the amount of heat input to a steam turbine and a steam turbine plant having this means according to the second embodiment of the invention will be described with reference to drawings. Portions equivalent to that of the first embodiment will be denoted by the same reference numerals, and a description thereof will be omitted.

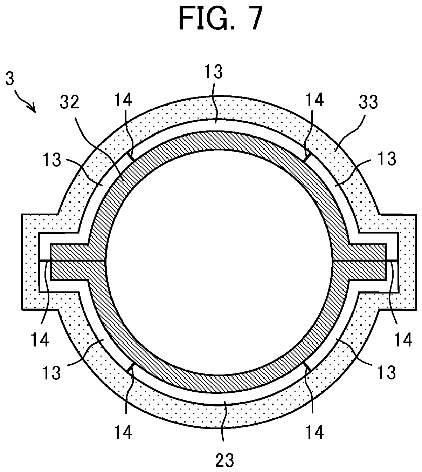

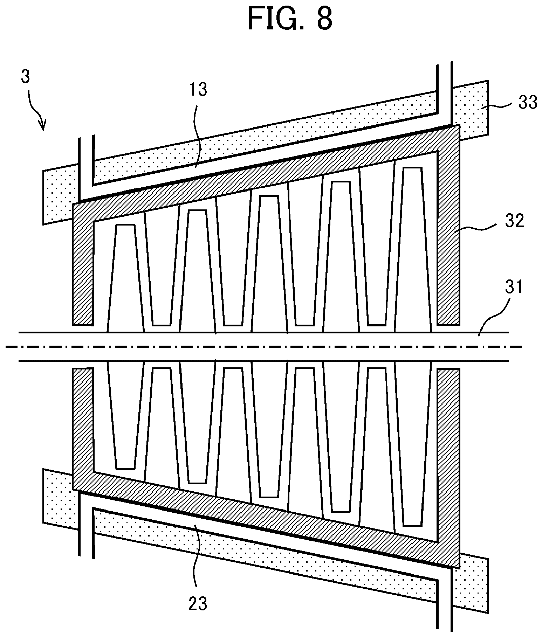

Fig. 6 is a schematic diagram illustrating a configuration of a steam turbine plant according to the embodiment. In Fig. 6, only configuration components and control circuits required for describing the invention are illustrated. Fig. 7 is a cross-sectional view in a turbine radial direction illustrating a schematic structure of a heating flow path and a cooling flow path of a casing of a steam turbine according to the embodiment, Fig. 8 is a cross-sectional view in a turbine axial direction. In Fig. 7, drawings of the rotor, the moving blade, and the stationary blade are omitted.

In the embodiment, a plurality (five in the embodiment) of the heating flow paths 13 having layer shape, and one cooling flow path 23 having layer shape are disposed between the casing 32 and the heat insulating material 33 of the steam turbine 3 (in other words, on outer surface of the casing 32) . The heating flow path 13 and the cooling flow path 23 are partitioned by a plurality of partition plates 14 extending in the turbine axial direction.

The cooling flow path 23 is disposed on a portion (portion of a lower half of the casing 32 in the embodiment) to be a relatively high temperature at the time of starting the plant. The heating flow paths 13 are disposed on a portion (remaining portion of a lower half and an upper half of the casing 32 in the embodiment) to be a relatively low temperature at the time of starting the plant. The portion to be the relatively high temperature at the time of starting the plant, for example, is a portion where piping in which the steam is supplied is installed. The cooling flow path 23 is configured so that the low temperature fluid flows into one end of the cooling flow path 23, and flows out from the other end of the cooling flow path 23, after cooling of a portion of the lower half of the casing 32 is finished. The heating flow path 13 is configured so that the high temperature fluid flows into one side end of the heating flow path 13, and flows out from the other end of the heating flow path 13, after heating of the remaining portion of the lower half and the upper half of the casing 32 is finished.

In the embodiment, a low temperature fluid supply passage 21 that supplies the low temperature fluid to the cooling flow path 23 is disposed. Here, the low temperature fluid supplied to the cooling flow path 23 is at a lower temperature than the steam supplied to the steam turbine 3 from the steam generating device 2. As the low temperature fluid, for example, air in the atmosphere, fluid obtained by mixing the air and a portion of the high temperature fluid flowing in the steam generating device 2, or the like is included. A low temperature fluid flow rate regulating device 22 disposed in the low temperature fluid supply passage 21 is adapted to regulate the flow rate of the low temperature fluid flowing in the low temperature fluid supply passage 21, based on the command value described later. The low temperature fluid flow rate regulating device 22 may be the same configuration as that of the high temperature fluid flow rate regulating device 12.

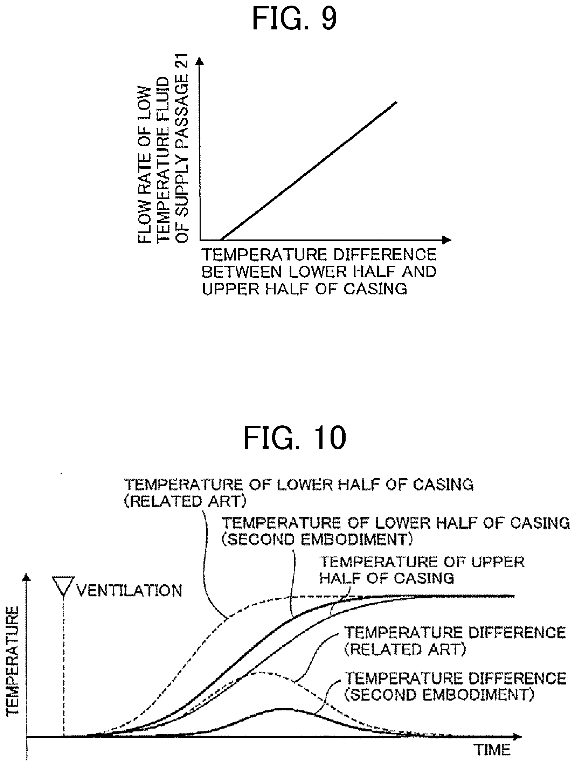

In the embodiment, the plant control device 5 has a cooling control circuit 201 that controls the low temperature fluid flow rate regulating device 22. The cooling control circuit 201 inputs the measurement value of the temperature difference between the lower half (that is, a portion where the cooling flow path 23 is disposed) and the upper half (that is, a portion where the heating flow path 13 is disposed) of the casing 32, or calculates the temperature difference between the lower half and the upper half of the casing 32 by the known method of the heat transfer engineering. For example, as illustrated in Fig. 9, a numerical table or a formula that indicates a relationship such that the flow rate of the low temperature fluid of the low temperature fluid supply passage 21 is increased, as the temperature difference between the lower half and the upper half of the casing 32 is increased, is previously stored. The flow rate of the low temperature fluid supply passage 21 is calculated from the measurement value or a calculated value of the temperature difference, based on the numerical table or the formula, and the command value corresponding to the flow rate is calculated and outputs to the low temperature fluid flow rate regulating device 22.

As illustrated in Fig. 9, an example of a method for obtaining the relationship between the temperature difference between the lower half and the upper half of the casing 32 and the flow rate of the low temperature fluid of the low temperature fluid supply passage 21, performs a following calculation for each temperature difference between the lower half and the upper half of the casing 32. The amount of heat required for the unit change in temperature of the lower half of the casing 32 is calculated from mass, or specific heat of the lower half of the casing 32, based on the known method of the heat transfer engineering. By integrating the temperature difference between the lower half and the upper half of the casing 32 with respect to the amount of heat required for the unit temperature change of the lower half of the casing 32, the required amount of heat (amount of cooling) in order that the temperature of the lower half of the casing 32 is to be equal to the temperature of the upper half is calculated. The required flow rate of the low temperature fluid for supplying the amount of heat is calculated from the amount of heat described above, the temperature of the low temperature fluid of the low temperature fluid supply passage 21, or thermal resistance between the low temperature fluid and the casing 32, based on the known method of the heat transfer engineering. In addition to this method, it is possible to seek by trial and error by using a steam turbine structure analysis tool created based on the known method of the heat transfer engineering.

In the embodiment configured as described above, at the time of starting the plant, the high temperature fluid is supplied to the heating flow path 13 of the casing 32 of the steam turbine 3 from the steam generating device 2 via the high temperature fluid supply passage 11. Thereby, at the time of starting the plant, the thermal expansion of the portion to be relatively low temperature is facilitated by heating the portion thereof. As a result, similar to the first embodiment, the differential thermal expansion between the rotor 31 and the casing 32 can be reduced.

In the embodiment, thermal deformation of the casing 32 can be reduced. Such as the function and effect will be described with compared to the related art. Fig. 10 is a view for explaining temperature difference between the lower half and the upper half of the casing of the steam turbine according to the embodiment and the related art.

In the related art (that is, in a case where the low temperature fluid supply passage 21, the low temperature fluid flow rate regulating device 22, and the cooling flow path 23 are not disposed), at the time of starting the plant, since temperature rise of the lower half and temperature rise of the upper half occur as illustrated in Fig. 10, the temperature difference between the lower half and the upper half is increased.

Meanwhile, in the embodiment, at the time of starting the plant, the low temperature fluid is supplied to the cooling flow path 23 of the casing 32 of the steam turbine 3 via the low temperature fluid supply passage 21. Thereby, the lower half of the casing 32 is cooled, and thus the temperature rise of the lower half of the casing 32 is suppressed, as illustrated in Fig. 10. As a result, the temperature difference between the lower half and the upper half of the casing 32 can be reduced, and the thermal deformation of the casing 32 can be reduced.

Although a case in which the cooling flow path 23 is disposed on the portion of the lower half of the casing 32 as the portion to be the relatively low temperature at the time of starting the plant is described as an example in the second embodiment, without being limited thereto, arrangement and number of the cooling flow path 23 may be determined by the analysis of the empirical knowledge or the known method of the heat transfer engineering. That is, the cooling flow path may be disposed on the upper half side of the casing 32 as the portion to be relatively low temperature, at the time of starting the plant. In addition, at the time of starting the plant, if the portion to be relatively low temperature and the portion to be the relatively high temperature is replaced, the cooling flow path and the heating flow path may be replaced. In such a case, it is possible to obtain the same effect as described above.

Features, components and specific details of the structures of the above-described embodiments may be exchanged or combined to form further embodiments optimized for the respective application.

## Claims

1. A steam turbine plant comprising:
a heat source device (1) that heats a low temperature fluid by a heat source medium to obtain a high temperature fluid;
a steam generating device (2) that generates steam by heat exchange with the high temperature fluid obtained by the heat source device (1);
a steam turbine (3) that is driven by the steam generated by the steam generating device (2);
**characterized by**
a heating flow path (13) that is disposed on an outer surface of a casing (32) of the steam turbine (3) and between the casing (32) and a heat insulating material (33);
a high temperature fluid supply passage (11) that is branched from a flow path of the high temperature fluid in the steam generating device (2), is connected to the heating flow path (13), and supplies the high temperature fluid to the heating flow path (13); and
a high temperature fluid flow rate regulating device (12) that regulates a flow rate of the high temperature fluid flowing through the high temperature fluid supply passage (13).

2. The steam turbine plant according to claim 1, further comprising:
a heating control circuit (101) that is configured to control the high temperature fluid flow rate regulating device (12) such that the flow rate of the high temperature fluid flowing through the high temperature fluid supply passage (13) is increased, as differential thermal expansion between a rotor (31) and the casing (32) of the steam turbine (3) is increased.

3. The steam turbine plant according to claim 1,
wherein the heating flow path (13) is disposed on a portion of the casing (32) to be at a relatively low temperature at a time of starting the plant,
the plant further comprising:
a cooling flow path (23) that is disposed on the outer surface of the casing (32) and between the casing (32) and the heat insulating material (33), and on a portion of the casing (32) to be at a relatively high temperature at the time of starting the plant;
a low temperature fluid supply passage (21) that supplies the low temperature fluid to the cooling flow path (23); and
a low temperature fluid flow rate regulating device (22) that regulates a flow rate of the low temperature fluid flowing through the low temperature fluid supply passage (21).

4. The steam turbine plant according to claim 3, further comprising:
a cooling control circuit (201) that is configured to control the low temperature fluid flow rate regulating device (22) so that the flow rate of the low temperature fluid flowing through the cooling flow path (23) is increased, as temperature difference between a portion where the cooling flow path (23) is disposed and a portion where the heating flow path (13) is disposed is increased.

5. The steam turbine plant, according to claim 2, wherein the differential thermal expansion is based on a measurement value or calculated by the heating control circuit (101).

## Patentansprüche

1. Dampfturbinenanlage, die Folgendes umfasst:
eine Wärmequellenvorrichtung (1), die ein Niedertemperaturfluid durch ein Wärmequellenmedium erhitzt, um ein Hochtemperaturfluid zu erhalten;
eine Dampferzeugungsvorrichtung (2), die durch Wärmetausch mit dem Hochtemperaturfluid, das von der Wärmequellenvorrichtung (1) erhalten wird, Dampf erzeugt;
eine Dampfturbine (3), die durch den Dampf angetrieben wird, der durch die Dampferzeugungsvorrichtung (2) erzeugt wird;
**gekennzeichnet durch**:
einen Heizungsströmungsweg (13), der auf einer Außenfläche eines Gehäuses (32) der Dampfturbine (3) und zwischen dem Gehäuse (32) und einem wärmeisolierenden Material (33) angeordnet ist;
einen Hochtemperaturfluid-Zufuhrkanal (11), der von einem Strömungsweg des Hochtemperaturfluids in der Dampferzeugungsvorrichtung (2) abzweigt, mit dem Heizungsströmungsweg (13) verbunden ist und dem Heizungsströmungsweg (13) das Hochtemperaturfluid zuführt; und
eine Hochtemperaturfluid-Durchflussmengenregulierungsvorrichtung (12), die eine Durchflussmenge des Hochtemperaturfluids, das durch den Hochtemperaturfluid-Zufuhrkanal (11) strömt, reguliert.

2. Dampfturbinenanlage nach Anspruch 1, die ferner Folgendes umfasst:
eine Heizungssteuerschaltung (101), die konfiguriert ist, die Hochtemperaturfluid-Durchflussmengenregulierungsvorrichtung (12) derart zu steuern, dass die Durchflussmenge des Hochtemperaturfluids, das durch den Hochtemperaturfluid-Zufuhrkanal (11) strömt, erhöht wird, wenn eine differentielle Wärmeausdehnung zwischen einem Rotor (31) und dem Gehäuse (32) der Dampfturbine (3) erhöht wird.

3. Dampfturbinenanlage nach Anspruch 1,
wobei der Heizungsströmungsweg (13) auf einem Abschnitt des Gehäuses (32) angeordnet ist, der zum Zeitpunkt des Startens der Anlage eine relativ niedrige Temperatur hat,
wobei die Anlage ferner Folgendes umfasst:
einen Kühlungsströmungsweg (23), der auf der Außenfläche des Gehäuses (32) und zwischen dem Gehäuse (32) und dem wärmeisolierenden Material (33) und auf einem Abschnitt des Gehäuses (32) angeordnet ist, der zum Zeitpunkt des Startens der Anlage eine relativ hohe Temperatur hat;
einen Niedertemperaturfluidzufuhrkanal (21), der dem Kühlungsströmungsweg (23) das Niedertemperaturfluid zuführt; und
eine Niedertemperaturfluid-Durchflussmengenreguliervorrichtung (22), die eine Durchflussmenge des Niedertemperaturfluids, das durch den Niedertemperaturfluidzufuhrkanal (21) strömt, zu regulieren.

4. Dampfturbinenanlage nach Anspruch 3, die ferner Folgendes umfasst:
eine Kühlsteuerschaltung (201), die konfiguriert ist, die Niedertemperaturfluid-Durchflussmengenregulierungsvorrichtung (22) derart zu steuern, dass die Durchflussmenge des Niedertemperaturfluids, das durch den Kühlungsströmungsweg (23) strömt, erhöht wird, wenn eine Temperaturdifferenz zwischen einem Abschnitt, an dem der Kühlungsströmungsweg (23) angeordnet ist, und einem Abschnitt, an dem der Heizungsströmungsweg (13) angeordnet ist, erhöht wird.

5. Dampfturbinenanlage nach Anspruch 2, wobei die differentielle Wärmeausdehnung auf einem Messwert basiert oder durch die Heizungssteuerschaltung (101) berechnet wird.

## Revendications

1. Centrale à turbine à vapeur comprenant :
un dispositif de source de chaleur (1) qui chauffe un fluide à basse température via un moyen de source de chaleur pour obtenir un fluide à haute température ;
un dispositif de génération de vapeur (2) qui génère de la vapeur par échange de chaleur avec le fluide à haute température obtenu par le dispositif de source de chaleur (1) ;
une turbine à vapeur (3) qui est entraînée par la vapeur générée par le dispositif de génération de vapeur (2) ;
**caractérisée par**
un trajet d'écoulement de chauffe (13) qui est disposé sur une surface extérieure d'un carter (32) de la turbine à vapeur (3) et entre le carter (32) et
un matériau d'isolation thermique (33) ;
un passage d'alimentation en fluide à haute température (11) qui est ramifié depuis un trajet d'écoulement du fluide à haute température dans le dispositif de génération de vapeur (2), qui est connecté au trajet d'écoulement de chauffe (13) et qui alimente le fluide à haute température jusqu'au trajet d'écoulement de chauffe (13) ; et
un dispositif de régulation de débit de fluide à haute température (12) qui régule un débit du fluide à haute température s'écoulant à travers le passage d'alimentation en fluide à haute température (13).

2. Centrale à turbine à vapeur selon la revendication 1, comprenant en outre :
un circuit de commande de chauffe (101) qui est configuré pour commander le dispositif de régulation de débit de fluide à haute température (12) de sorte que le débit du fluide à haute température s'écoulant à travers le passage d'alimentation en fluide à haute température (13) est augmenté lorsqu'une expansion thermique différentielle entre un rotor (31) et le carter (32) de la turbine à vapeur (3) est augmentée.

3. Centrale à turbine à vapeur selon la revendication 1,
dans laquelle le trajet d'écoulement de chauffe (13) est disposé sur une portion du carter (32) pour être à une température relativement basse au moment d'un démarrage de la centrale,
la centrale comprenant en outre :
un trajet d'écoulement de refroidissement (23) qui est disposé sur la surface extérieure du carter (32) et entre le carter (32) et le matériau d'isolation thermique (33), et sur une portion du carter (32) pour être à une température relativement élevée au moment du démarrage de la centrale ;
un passage d'alimentation en fluide à basse température (21) qui alimente le fluide à basse température jusqu'au trajet d'écoulement de refroidissement (23) ; et
un dispositif de régulation de débit de fluide à basse température (22) qui régule un débit du fluide à basse température s'écoulant à travers le passage d'alimentation en fluide à basse température (21).

4. Centrale à turbine à vapeur selon la revendication 3, comprenant en outre : un circuit de commande de refroidissement (201) qui est configuré pour commander le dispositif de régulation de débit de fluide à basse température (22) de sorte que le débit du fluide à basse température s'écoulant à travers le trajet d'écoulement de refroidissement (23) est augmenté quand une différence de température entre une portion dans laquelle le trajet d'écoulement de refroidissement (23) est disposé et une portion dans laquelle le trajet d'écoulement de chauffe (13) est disposé est augmentée.

5. Centrale à turbine à vapeur selon la revendication 2, dans laquelle l'expansion thermique différentielle est basée sur une valeur de mesurage ou est calculée par le circuit de commande de chauffe (101).
